Europäisches Patentamt

European Patent Office

Office européen des brevets

(11) Publication number: **0 141 466**
**A2**

# (12) EUROPEAN PATENT APPLICATION

(21) Application number: **84201563.8**

(22) Date of filing: **31.10.84**

(51) Int. Cl.⁴: **H 04 L 27/16**
**H 04 L 27/14**

(30) Priority: **07.11.83 NL 8303819**

(43) Date of publication of application:
**15.05.85 Bulletin 85/20**

(84) Designated Contracting States:
**BE CH DE FR GB IT LI NL SE**

(71) Applicant: **N.V. Philips' Gloeilampenfabrieken**
**Groenewoudseweg 1**
**NL-5621 BA Eindhoven(NL)**

(72) Inventor: **Verstraelen, Marie M.A.A.G.**
**c/o INT. OCTROOIBUREAU B.V. Prof. Holstlaan 6**
**NL-5656 AA Eindhoven(NL)**

(74) Representative: **De Jongh, Cornelis Dominicus et al,**
**INTERNATIONAAL OCTROOIBUREAU B.V. Prof.**
**Holstlaan 6**
**NL-5656 AA Eindhoven(NL)**

(54) **Sampled costas loop.**

(57) A Costas loop for recovering the carrier signal from a carrier signal which is continuously phase-modulated by a data signal. So as to increase the stability of the Costas loop the loop comprises a clock signal generator-controlled sample-and-hold circuit for applying as a control signal to the voltage-controlled oscillator a square-wave signal which is obtained by instantaneously sampling the control signal generated in the Costas loop at a predetermined fixed instant per bit period.

FIG.1

Sampled Costas Loop.

The invention relates to a carrier regeneration circuit for recovering a carrier signal from a carrier signal which is continuously phase-modulated by a data signal, comprising a voltage-controlled oscillator for generating two signals whose phases are shifted through $90^{\circ}$ relative to each other, a quadrature demodulator to which the continuously phase-modulated carrier signal and the two mutually $90^{\circ}$ phase-shifted signals are applied, two Costas multipliers connected to the quadrature demodulator, a summing circuit connected to these two multipliers for adding together the signals produced by the multipliers, this summing arrangement being coupled to the voltage-controlled oscillator, and a clock pulse generator.

Continuous phase-modulation is used because of a constant amplitude of the modulated carrier signal and a not too excessive bandwidth suitable for practical usages. The constant amplitude has the advantage that non-linear amplification can be applied. This class of modulation comprises _inter alia_ tamed frequency modulation (TFM), Gaussian minimal shift keying (GMSK) and correlative phase-shift keying (CORPSK).

The above-mentioned carrier regeneration circuit is known as a Costas loop. Such a loop, which fundamentally is an analogue loop, is frequently used in recovering carrier signals which are continuously phase-modulated by data signals, as is, for example, described in the article "Tamed frequency modulation, a bandwidth saving digital modulation method suited for mobile radio", by D. Muilwijk, published in Philips Telecommunication Review Vol. 37, No. 1, March 1979, pages 35-49.

In practice it has however been found that using the Costas loop for continuously phase-modulated signals results in a comparatively high amount of jitter in the recovered carrier signal. This has _inter alia_ the disadvantage that when a received signal has a poor signal-to-noise ratio, the loop can get rather quickly out of its control range.

The invention has for its object to increase in a simple way the stability of a carrier regeneration circuit as described in the opening paragraph, for the recovery of the carrier signal from a carrier signal whose phase is continuously modulated by a data signal. According

0141466

to the invention, the carrier regeneration circuit is characterized in that the circuit comprises, arranged between the summing arrangement and the voltage-controlled oscillator, a sample-and-hold arrangement to which the clock pulse generator is connected for instantaneously sampling, at at least a predetermined instant of each bit period of the data signal, the signal supplied by the summing arrangement and for applying the instantaneously sampled signal values to the voltage-controlled oscillator.

The invention is based on the recognition that with continuously phase-modulated signals the phase has a substantially predetermined value at at least one fixed instant per bit. By the instantaneous sampling of the phase at that instant, that is to say sampling with a pulse which is as narrow as possible, supplies optimum information about the phase, so that any phase error of the recovered carrier can be corrected to an improved extent and consequently earlier and more accurately.

It should here be noted that from German Offenlegungsschrift 2,508,540 or United States Patent Specification 4,137,505 it is known per se to apply bit-sequential sampling during carrier regeneration. However these documents relate to discrete phase-modulated signals which are sampled with a widest possible pulse. A greater reduction of the pulse width than necessary for reducing the influence of hard or soft phase transitions would lead to a poor stability of the loop.

The invention and its advantages will now be described in greater detail, by way of example, with reference to the embodiments shown in the accompanying drawings.

Therein:

Figure 1 shows an embodiment of a carrier regeneration circuit according to the invention, and

Figure 2 shows some signals which may occur in the carrier regeneration circuit of the embodiment illustrated in Figure 1.

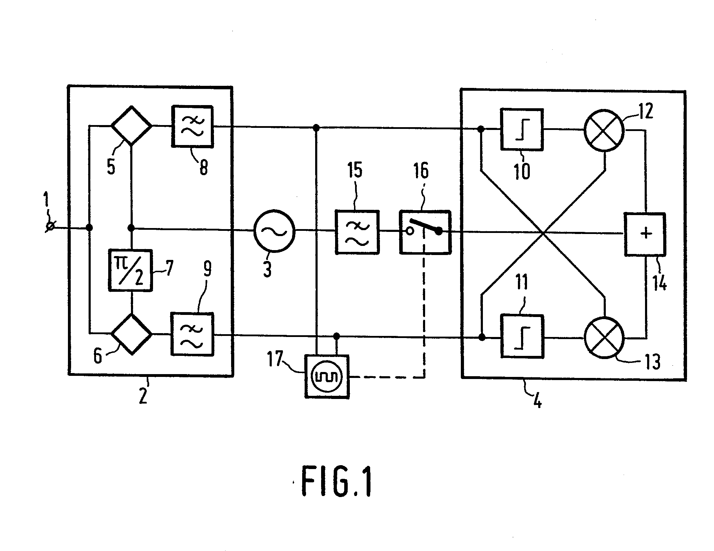

The carrier regeneration circuit shown in Figure 1 is what is commonly referred to as a Costas loop. Such a loop comprises a quadrature demodulator 2 connected to an input terminal 1, a voltage-controlled oscillator 3 connected to the demodulator 2 and a feedback circuit 4 arranged between the demodulator 2 and the oscillator 3.

A (CPM) whose phase is continuously modulated by a data signal is applied to input terminal 1. An example of such a carrier signal is a TFM signal with reference to which the operation of the circuit will now be described in detail.

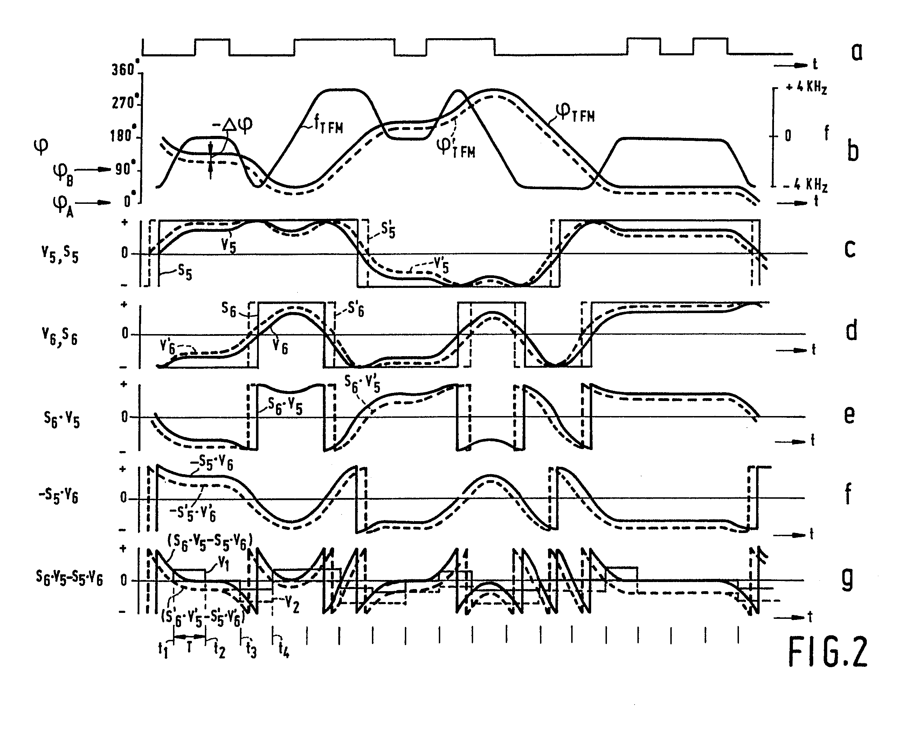

The phase variation of a TFM signal applied to an input terminal 1, as is determined by the data signal shown in Figure 2a, is shown in Figure 2b as a function of time by means of a solid line $\varphi_{TFM}$. The associated frequency variation is illustrated by the solid line $f_{TFM}$. In addition to the phase variation $\varphi_{TFM}$ Figure 2b shows a broken line $\varphi'_{TFM}$ whose phase is shifted through a fixed distance $-\Delta\varphi$ relative to $\varphi_{TFM}$ and represents a phase shift between the TFM signal received and the recovered carrier signal.

The TFM signal applied to input terminal 1 is multiplied in a demodulator 5 of the quadrature demodulator 2 by the carrier signal produced by the oscillator 3 and in a demodulator 6 is multiplied by the carrier signal whose phase was shifted through $90^{\circ}$ by means of the phase shifter 7. After the signal generated by the demodulator 5 has been filtered by the low-pass filter 8, the voltage signal $V_5$ shown in Figure 2c which is derived from $\varphi_{TFM}$ and $V'_5$ derived from $\varphi'_{TFM}$, respectively are obtained. After the signal regenerated by the demodulator 6 has been filtered by the low-pass filter 9, the respective voltage signals $V_6$ and $V'_6$ shown in Figure 2d are obtained. These signals are applied to the feedback circuit 4. In this feedback circuit the signals $V_5$ and $V'_5$, respectively are converted by the level detector 10 into the respective square-wave signals $S_5$ and $S'_5$ shown in Figure 2c, which represent the signs of the respective signals $V_5$ and $V'_5$. Likewise, the level detector 11 converts the signal $V_6$ and $V'_6$, respectively into the respective square-wave signals $S_6$ and $S'_6$, respectively shown in Figure 2d, which represent the signs of the respective signals $V_6$ and $V'_6$. Thereafter, the signals $S_5$, $V_6$ and $S'_5$, $V'_6$, respectively are applied to a Costas multiplier 12 so as to obtain the respective product signals $-S_5 \times V_6$ and $-S'_5 \times V'_6$ shown in Figure 2f, and the signals $S_6$, $V_5$ and $S'_6$, $V'_5$, respectively are applied to a Costas multiplier 13 for obtaining the respective signals $+S_6 \times V_5$ and $+S'_6 \times V'_5$, shown in Figure 2e. The signals thus obtained are applied to the summing circuit 14, which produces the respective control signals $(S_5 \times V_6 - S_6 \times V_5)$ and $(S'_5 \times V'_6 - S'_6 \times V'_5)$, shown in Figure 2g. Normally, this control signal is applied directly to the voltage-controlled oscillator 3 <u>via</u> the loop filter 15 which has a low-pass characteristic, to correct the phase of the carrier signal generated by the oscillator 3.

As can be clearly seen from Figure 2g there is only d.c. voltage information in the control signal during the period of time in which the TFM signal has its nominal frequency, which occurs when the phase line $\varphi_{TFM}$ and $\varphi'_{TFM}$, respectively extends horizontally. For the solid line, so when the carrier oscillator 3 is in phase with the received signal, this d.c. voltage value is equal to zero volts and has a negative value when a negative phase difference $-\Delta\varphi$ occurs, the magnitude of the negative voltage value being proportional to $\Delta\varphi$. Similarly, the d.c. voltage value is positive when a positive phase difference $+\Delta\varphi$ occurs.

In addition to a d.c. voltage value the control signal shown in Figure 2g has an irregularly varying a.c. component. The latter component is the means by which the Costas loop can be moved comparatively quickly from its control range by the jitter occurring in the received TFM signal.

In order to obviate this the Costas loop comprises a sample-and-hold arrangement 16, connected between the summing arrangement 14 and the voltage-controlled oscillator 3 and a clock pulse generator 17 is connected to the sampling arrangement. This clock pulse generator 17 generates in known manner from the received TFM signal a clock signal whose frequency $f_{cl}$ has the reciprocal value of the bit period T of the data signal. To improve the stability of the loop, use is made of the fact that width continuously phase-modulated signals the phase of the modulated signal has a predetermined value at at least one instant in each bit period T. For TFM signals this instant occurs at the end of each data bit having a multiple of $\pi/4$ and halfway each bit interval, the phase being substantially $(\pi/4 + n \cdot \pi/2)$ and $\underline{n}$ being an integer. By sampling the output signal of the summing arrangement under the control of the clock signal at that fixed instant at which the phase has the predetermined value and by applying the instantaneous value of this signal as a control signal to the voltage-controlled oscillator also during the remaining time of the bit period results in a considerably higher d.c. voltage information signal as a control signal whilst the value of the a.c. voltage signal information is simultaneously decreased. This will be obvious from Figure 2g. At the sampling instants $t_1$, $t_2$.... $t_n$ shown in Figure 2g, the square-wave control signal $V_1$, which is also represented by a solid line is obtained from the control signal which is represented by the broken line. As its average value this signal $V_1$

has again the value zero, however the a.c. voltage amplitude has a much lower value than that of the original control signal. The control signal $V_2$, which is represented by a broken line is obtained in a corresponding way from the control signal which is also illustrated by a broken line. As can be seen from Figure 2g, the d.c. voltage information of this control signal $V_2$ is considerably increased compared with the d.c. voltage of the non-sampled signal. This results in a faster control as a result of which the loop has become much stabler and is not brought out of its control range until at a much lower value of the signal-to-noise ratio.

It should be noted that the hold circuit of the sample-and-hold arrangement may be provided in the voltage controlled oscillator 3, so that, as shown in Figure 1, the arrangement 16 has only one single switching contact, for example only a very fast switching transistor to obtain as accurately an instantaneously sampled signal value as possible. Although the description relates to TFM-signals, the regeneration circuit is not limited thereto but can be used for all continuously phase-modulated carriers. Thus, CORPSK (4-7, 1+D) signals can be started at one instant per bit period amounting to an integer multiple of $\pi/2$.

CLAIMS

1.      A carrier regeneration circuit for recovering a carrier signal from a carrier signal which is continuously phase-modulated by a data signal, comprising a voltage-controlled oscillator for regenerating two signals whose phases are shifted through $90^{\circ}$ relative to each other, a quadrature demodulator to which the continuously phase-modulated carrier signal and the two mutually $90^{\circ}$ phase-shifted signals are applied, two Costas multipliers connected to the quadrature demodulator, a summing arrangement connected to these two multipliers for adding together the signals produced by the multipliers, the summing arrangement being coupled to the voltage-controlled oscillator, and a clock pulse generator, characterized in that the circuit comprises, arranged between the summing arrangement and the voltage-controlled oscillator, a sample-and-hold arrangement to which the clock pulse generator is connected for instantaneously sampling at at least one predetermined instant per bit period of the data signal/produced by the summing arrangement and for applying the instantaneously sampled signal values to the voltage-controlled oscillator.

2.      A carrier regeneration circuit as claimed in Claim 1, characterized in that the hold circuit forms part of the voltage-controlled oscillator.

FIG.1

FIG.2

2/2

014466